# EUROPÄISCHE PATENTSCHRIFT

(11) **EP 3 413 188 B1**
(45) Veröffentlichungstag und Bekanntmachung des Hinweises auf die Patenterteilung: **16.09.2020**
(21) Anmeldenummer: 17174513.6
(22) Anmeldetag: 06.06.2017
(51) Int. Cl.: G06F 7/58

(54) **VERFAHREN ZUR OPTIMALEN ANORDNUNG EINES ZUFALLSZAHLENGENERATORS**
METHOD FOR OPTIMAL LAYOUT OF A RANDOM NUMBER GENERATOR
PROCÉDÉ DE DISPOSITION OPTIMALE D'UN GÉNÉRATEUR DE NOMBRES ALÉATOIRES

(43) Veröffentlichungstag der Anmeldung: 12.12.2018
(73) Patentinhaber: Siemens Aktiengesellschaft, 80333 München (DE)
(72) Erfinder: Matschnig, Martin, 3430 Tulln (AT); Hinterstoisser, Thomas, 2102 Bisamberg (AT); Taucher, Herbert, 1190 Wien (AT)
(74) Vertreter: Maier, Daniel Oliver

(56) Entgegenhaltungen:
- US-A1- 2009 110 188
- MEHRDAD MAJZOOBI ET AL: "FPGA-Based True Random Number Generation Using Circuit Metastability with Adaptive Feedback Control", 28. September 2011 (2011-09-28), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 17 - 32, XP019166873, ISSN: 0302-9743 ISBN: 978-3-642-24784-2 * Abschnitte 3, 5 und 6 *
- DAN HOTOLEANU ET AL: "Real-Time Testing of True Random Number Generators Through Dynamic Reconfiguration", 13TH EUROMICRO CONFERENCE ON DIGITAL SYSTEM DESIGN: ARCHITECTURES, METHODS AND TOOLS; 1-3 SEPT. 2010, LILLE, FRANCE, IEEE, US, 1. September 2010 (2010-09-01), Seiten 247-250, XP031785175, ISBN: 978-1-4244-7839-2
- DEAK NORBERT ET AL: "Highly Efficient True Random Number Generator in FPGA Devices Using Phase-Locked Loops", 2015 20TH INTERNATIONAL CONFERENCE ON CONTROL SYSTEMS AND COMPUTER SCIENCE, IEEE, 27. Mai 2015 (2015-05-27), Seiten 453-458, XP033187931, DOI: 10.1109/CSCS.2015.19 [gefunden am 2015-07-27]

## Beschreibung

### Technisches Gebiet

Die vorliegende Erfindung betrifft allgemein das Gebiet der elektronischen Systeme und Schaltungen, insbesondere programmierbare, integrierte Schaltungen wie z.B. Field Programmable Gate Arrays (FPGAs). Im Speziellen bezieht sich die vorliegende Erfindung auf ein Verfahren zur optimalen Anordnung eines Zufallsgenerators, insbesondere eines Hardware-Zufallsgenerators, auf einem elektronischen Bauteil, wobei der elektronische Bauteil, auf welchem der Zufallsgenerator realisiert wird, als programmierbare, integrierte Schaltung, insbesondere als Field Programmable Gate Array oder FPGA, ausgeführt ist und eine aus einer Vielzahl an Basisblöcken bestehende Grundstruktur aufweist. Weiterhin betrifft die vorliegende Erfindung auch eine zugehörige Anordnung eines Zufallsgenerators, insbesondere Hardware-Zufallsgenerators.

### Stand der Technik

Bei sicherheitsrelevanten Anwendungen, wie z.B. bei kryptographischen Anwendungen, Authentifizierungsverfahren, Verschlüsselungsverfahren, etc. werden häufig Zufallsbitfolgen als binäre Zufallszahlen eingesetzt. Zum Erzeugen einer zufälligen Bitfolge werden üblicherweise Zufallsgeneratoren eingesetzt, wobei zum Generieren von Zufallszahlen beispielsweise Pseudozufallszahlengeneratoren und/oder physikalische oder Hardware-Zufallsgeneratoren, welche auch als True Random Number Generator (TRNG) bezeichnet werden, eingesetzt werden.

Bei Pseudozufallsgeneratoren oder deterministischen Zufallszahlengeneratoren werden Zufallsbits algorithmisch erzeugt. Dadurch sind die erzeugten Zufallsbits nicht wirklich zufällig, sondern deterministisch, haben aber ähnliche statistisehe Eigenschaften wie echte Zufallszahlen. Für eine Berechnung von Zufallszahlen werden Startwerte - so genannte Seeds - herangezogen, welche üblicherweise von einer anderen Zufallsquelle erzeugt werden. Hierzu werden häufig echte Zufallszahlen eingesetzt, welche von einem Hardware-Zufallsgenerator geliefert werden.

Physikalische oder Hardware-Zufallsgeneratoren, welche auch als True Random Number Generator (TRNG) bezeichnet werden, sind wichtige, essentielle Bauteileinheiten bei sicherheitsrelevanten Anwendungen. Sie werden üblicherweise eingesetzt, um Zufallszahlen mit einer hohen Entropie bzw. hohen Qualität (d.h. mit einer geringen Vorhersagbarkeit) zu generieren. Daher werden Hardware-Zufallsgeneratoren in sicherheitsrelevanten Anwendungen beispielsweise zum Erzeugen von geheimen und/oder öffentlichen Schlüsseln bei Verschlüsselungsverfahren und als Initialisierungsvektoren oder Startwerte (so genannte Seeds) für verschiedenen kryptographische Funktionen oder Pseudo-Zufallsgeneratoren eingesetzt.

Bei Hardware-Zufallsgeneratoren dient üblicherweise ein physikalischer Prozess als Zufallsquelle. Der physikalische Prozess (z.B. radioaktiver Zerfall, thermisches Rauschen von Halbleitern, freischwingende Oszillatoren, etc.) wird beispielsweise mittels Sensoren erfasst und aus den gemessenen Daten werden anschließend die Zufallsbits bzw. Zufallszahlen extrahiert. Derartige Hardware-Zufallsgeneratoren weisen z.B. erhebliche Nachteile wie z.B. aufwendige Messvorrichtungen zum Beobachten der jeweiligen physikalischen Größe, Beeinflussung der Arbeitsweise durch z.B. äußere Einflüsse, Alterung, etc. auf. Daher gab es Bestrebungen, Hardware-Zufallsgeneratoren mittels elektronischer Schaltungen - insbesondere mittels so genannter Field Programmable Gate Arrays oder FPGAs - zu realisieren.

FPGAs sind im Anwendungsfeld programmierbare Logikgatteranordnungen, welche prinzipiell flexibel eingesetzt und umprogrammiert werden können. Dabei werden Basisblöcke entsprechend programmiert bzw. miteinander verschaltet, um gewünschte Funktionen auszuführen bzw. um gewünschte Schaltungsstrukturen abzubilden, wobei durch Konfiguration der Basisblöcke diese verschiedenen Schaltungsstrukturen und Funktionen realisiert werden können. Bei der Realisierung eines Hardware-Zufallsgenerators mittels FPGA können beispielsweise unterschiedliche Mechanismen und/oder physikalische Effekt in der wiederprogrammierbaren FPGA-Logik ausgenutzt werden. Eine häufig verwendete Realisierungsvariante eines Hardware-Zufallsgenerators mittels eines FPGAs basiert beispielsweise auf Ringoszillatoren wie z.B. aus der Schrift DE 10 2008 048 292 A1 bekannt.

Eine Herstellung von digital implementierten Hardware-Zufallsgeneratoren als programmierbare, elektronische Schaltung, insbesondere als FPGA, kann zwar günstig erfolgen, allerdings kann es aufgrund von Fertigungsschwankungen bei den jeweiligen elektronischen Bauteilten zu Störungen im Prozess der Zufallszahlenerzeugung kommen, welche die Entropie bzw. die Qualität der generierten Zufallszahlen negativ beeinflussen. Die Entropie als Maß für eine Menge an Zufallsinformation in einer Informationsfolge bzw. Zufallszahlenfolge kann damit auch ein Maß für die Qualität der mit dem Zufallsgenerator erzeugten Zufallszahlen darstellen. Insbesondere kann die Entropie der generierten Zufallszahlen von einer tatsächlichen und endgültigen Anordnung des Zufallsgenerators innerhalb der FPGA-Struktur bzw. am jeweiligen elektronischen Bauteil abhängen. Vor allem bei der Realisierung des Hardware-Zufallsgenerators auf Basis einer großen Anzahl von Ringoszillatoren kann die physische Anordnung des Hardware-Zufallsgenerators auf dem jeweiligen elektronischen Bauteil bzw. innerhalb der FPGA-Struktur, die Entropie und damit die Qualität der Zufallszahlen wesentlich beeinflussen.

Um die Qualität eines innerhalb einer FPGA-Struktur implementierten Zufallsgenerators abzuschätzen, können beispielsweise während einer Designphase des Hardware-Zufallsgenerators Mechanismen für eine Überprüfung der generierten Zufallszahlen während der Laufzeit eingefügt werden. Mittels dieser Mechanismen kann beispielsweise die Qualität der generierten Zufallszahlen laufend geprüft werden, um z.B. während des Einsatzes/Betriebs des FPGAs von einer Systemseite her sofort entsprechende Maßnahmen (z.B. Nachbearbeitung der Zufallszahlen, Alarmmeldung, etc.) setzen zu können. Weiterhin können z.B. algorithmische Nachbearbeitungen durchgeführt werden, um statistische Defekte in den generierten Zufallszahlen zu kompensieren und die Entropie der generierten Zufallszahlen zu erhöhen. Zusätzlich oder alternativ, können beispielsweise kryptographisch starke Hash-Funktionen verwendet werden, um Schwankungen in der Häufigkeitsverteilung auszugleichen. Diese angeführten Maßnahmen zum Ausgleichen von Fertigungsschwankungen bei den elektronischen Bauteilen bzw. zur Verbesserung der Entropie der Zufallszahlen führen allerdings zu zusätzlichem Aufwand und Kosten bei z.B. Design, Implementierung und Betrieb des Hardware-Zufallsgenerators. Weiterhin können vor allem Fertigungsschwankungen der elektronischen Bauteile bzw. in der FPGA-Struktur - vor allem bei hohen Stückzahlen - nur bedingt ausgeglichen werden.

Alternativ kann die Qualität eines Hardware-Zufallsgenerators durch entsprechende Tests und deren statischer Auswertung geprüft werden. Dazu wird beispielsweise für die Realisierung des Hardware-Zufallsgenerators eine fixe physische Anordnung innerhalb der FPGA-Struktur bzw. am elektronischen Bauteil festgelegt. Es werden beispielsweise auf Basis von einem oder mehreren individuellen FPGA-Bauteilen mit diesem implementierten Hardware-Zufallsgenerator Testmuster extrahiert und dann statistische Evaluierungen durchgeführt. Auch dabei können Fertigungsschwankungen und ein Einfluss des jeweiligen Bauteils bzw. der jeweiligen spezifischen FPGA-Struktur auf die Entropie und Qualität der generierten Zufallszahlen nur bedingt erkannt werden. Gegebenenfalls werden nicht alle Hardware-Zufallsgeneratoren, deren Zufallszahlen aufgrund von individuellen Bauteilspezifischen Schwankungen eine niedrige Entropie aufweisen, erkannt, da die Testmuster von den ausgewählten Bauteilen bzw. FPGAs bzw. realisierten Hardware-Zufallsgeneratoren abhängig sind.

### Darstellung der Erfindung

Der Erfindung liegt daher die Aufgabe zugrunde, ein Verfahren zur optimalen Anordnung eines Hardware-Zufallsgenerators sowie eine zugehörige Anordnung des Hardware-Zufallsgenerators anzugeben, welche mittels einer programmierbaren, digitalen integrierten Schaltung, insbesondere mittels eines Field Programmable Gate Arrays oder FPGAs realisiert wird, anzugeben, wobei negative Einflüsse aufgrund von Fertigungsschwankungen und aufgrund von Variationen in der digitalen, integrierten Schaltung auf die Qualität bzw. Entropie der generierten Zufallszahlenfolgen auf einfache Weise weitgehend kompensiert werden.

Diese Aufgabe wird durch ein Verfahren der eingangs genannten Art sowie durch eine zugehörige Zufallsgenerator-Anordnung mit den Merkmalen gemäß den unabhängigen Patentansprüchen gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren der eingangs erwähnten Art, bei welchem während einer Initialisierungsphase während der Fertigung ausgehend von einer Startkonfiguration für eine jeweils aktuelle Anordnung des Zufallsgenerators auf dem jeweiligen elektronischen Bauteil bzw. innerhalb einer FPGA-Grundstruktur folgende Schritte mit einer vorgegebenen Anzahl an Wiederholungen durchgeführt werden:
- Aufführen einer vorgegebenen Testfolge mit der jeweils aktuelle Anordnung des Zufallsgenerators;
- Weiterleiten eines Testergebnisses an ein Rekonfigurationsmodul;
- Umkonfigurieren der jeweils aktuellen Anordnung des Zufallsgenerators auf dem elektronischen Bauteil bzw. innerhalb der FPGA-Struktur durch das Rekonfigurationsmodul.

Dabei wird bei jeder Wiederholung das Testergebnis der jeweils aktuellen Anordnung des Zufallsgenerators mit dem Testergebnis einer jeweils vorhergegangen Anordnung des Zufallsgenerators verglichen. Die jeweils aktuelle Anordnung des Zufallsgenerators wird dann abgespeichert, wenn das Testergebnis der jeweils aktuellen Anordnung des Zufallsgenerators ein besseres Testergebnis als die jeweils vorhergegangene Anordnung des Zufallsgenerators aufweist. Ist das jeweilige Testergebnis schlechter als das Testergebnis der vorangegangenen Anordnung des Zufallsgenerators, so wird die jeweils aktuelle Anordnung verworfen und die vorangegangene Anordnung des Zufallsgenerators bleibt gespeichert - so lange bis durch eine der darauffolgenden Anordnungen des Zufallsgenerators ein besserer Testergebnis erzielt wird oder die Anzahl der vorgegebenen Wiederholungen erreicht ist.

Der Hauptaspekt der erfindungsgemäß vorgeschlagenen Lösung besteht darin, dass ohne manuelle Interaktion und mit geringem Aufwand eine für das jeweilige (individuelle) elektronische Bauteil bzw. FPGA optimale Anordnung des Hardware-Zufallsgenerators während einer Initialisierungsphase in der Fertigung gefunden werden kann. Dabei wird die Anordnung des Hardware-Zufallsgenerators speziell für das jeweilige individuelle, elektronische Bauteile bzw. die jeweilige individuelle FPGA-Struktur optimiert. D.h. es werden durch das erfindungsgemäße Verfahren automatisch eine optimale Anordnung des Zufallsgenerators auf dem jeweiligen individuellen, elektronischen Bauteile/innerhalb der jeweiligen individuellen FPGA-Struktur ermittelt und damit negative Einflüsse durch Fertigungsschwankungen und Variationen des jeweiligen Bauteils bzw. der jeweiligen FPGA-Struktur weitgehend kompensiert. D.h. es werden die negative Einflüsse auf eine Qualität des Zufallsgenerators bzw. die durch den Zufallsgenerator generierten Zufallszahlen durch das erfindungsgemäße Verfahren bzw. die spezifisch optimierte Anordnung des Zufallsgenerators weitgehend ausgeglichen. Durch das erfindungsgemäße Verfahren besteht damit die Möglichkeit Folgen von Zufallszahlen mit hoher Entropie bzw. Qualität innerhalb von FPGA-basierten Sicherheitsanwendungen zu generieren, ohne großen Aufwand für Tests und statische Evaluierung und/oder Nachbearbeitung der generierten Zufallszahlen nach der Fertigung bzw. im laufenden Betrieb.

Hierbei empfiehlt es sich, wenn als Testergebnis eine Entropie von jenen Zufallszahlen herangezogen wird, welche mit der jeweils aktuellen Anordnung des Zufallsgenerators auf dem elektronischen Bauteil erzeugt werden. Die Entropie ist ein Maß für eine Menge an Zufallsinformation in einer Informations- bzw. Zufallszahlenfolge und liefert damit einen Aussage über die Qualität der Zufallszahlen bzw. über den Zufallsgenerator, mit welchem die jeweiligen Zufallszahlen generiert wurden. Weist eine Anordnung des Zufallsgenerators auf dem elektronischen Bauteil eine höhere Entropie auf als eine vorangegangene Anordnung, so weisen die damit erzeugten Zufallszahlen eine größere Zufallsinformation auf und es ist daher schwieriger, dies z.B. zu erraten.

Es ist weiterhin günstig, wenn zum Ausführen der vorgegebenen Testfolge ein Testmodul verwendet wird, in welchem die vorgegebene Testfolge fest programmiert ist. Dieses Testmodul kann für die Initialisierungsphase während der Fertigung auf den jeweiligen elektronischen Bauteil bzw. in die jeweilige FPGA-Grundstruktur geladen und dort implementiert werden. Die Testfolge, welche dann für die jeweils aktuellen Anordnungen des Zufallsgenerators durchgeführt wird, besteht üblicherweise aus einem Satz von Tests. Eine mögliche Testfolge ist z.B. die so genannte NIST Statistical Test Suite, welche beispielsweise in der Schrift D. Hotoleanu, O. Cret, A. Suciu, T. Gyorfi and L. Vacariu; "Real-Time Testing of True Random Number Generators Through Dynamic Reconfiguration", 2010 ,Euromicro Conference on Digital System Design: Architectures, Methods and Tools, pp. 247-250. beschrieben wird. Die NIST Statistical Test Suite umfasst beispielsweise 16 Tests, wobei von jedem Test aus einer Bitfolge ein statischer Wert berechnet wird, welcher mit einem so genannten Signifikanz-Niveau-Wert verglichen wird. Ein qualitativ hochwertiger Zufallsgenerator sollte alle Test der so genannten NIST Statistical Test Suite bestehen.

Idealerweise wird für die Implementierung des Zufallsgenerators zumindest ein aus Basisblöcken bestehender Bereich der elektronischen Bauteils bzw. der physischen FPGA-Grundstruktur reserviert. Dieser reservierte Bereich wird nur für die Implementierung einer Logik des Hardware-Zufallsgenerators verwendet. Idealerweise ist der für den Zufallsgenerator reservierte Bereich größer als jener Bereich, welcher für eine tatsächliche Implementierung des Zufallsgenerators benötigt wird, damit sehr einfach unterschiedliche Anordnungen des Zufallsgenerators am elektronischen Bauteil ausprobiert und getestet werden können. Der für den Zufallsgenerator reservierte Bereich - gegebenenfalls mit einer Anfangsanordnung des Zufallsgenerators - wird ebenfalls - wie das Testmodul und das Rekonfigurationsmodul als Startkonfiguration - für die Initialisierungsphase während der Fertigung auf den jeweiligen elektronischen Bauteil bzw. in die jeweilige FPGA-Grundstruktur geladen.

Das Umkonfigurieren der jeweils aktuellen Anordnung des Zufallsgenerators während der Initialisierungsphase in der Fertigung wird vom Rekonfigurationsmodul übernommen. Dabei wird die jeweilige, aktuelle Anordnung der Basisblöcke, durch welche der Zufallsgenerator repräsentiert wird, von Rekonfigurationsmodul autonom und dynamisch angepasst bzw. verändert. D.h. die jeweilige FPGA-Konfiguration des für den Zufallsgenerator reservierten Basisblock-Bereichs wird direkt vom Rekonfigurationsmodul umprogrammiert. Dabei wird in vorteilhafter Weise ein interner partieller Rekonfigurationsmechanismus wie z.B. die so genannte Dynamic Partial Reconfiguration- oder DPF-Anwendung eingesetzt, durch welchen es möglich ist, mehrere zeitlich exklusive Funktionen auf der gleichen physikalischen Bauteilfläche bzw. FPGA-Fläche zu implementieren. Basieren auf einer Rückmeldung bzw. der Weiterleitung des Testergebnisses für die gerade aktuelle Zufallsgenerator-Anordnung des Testmoduls, wird dann eine neue Zufallsgenerator-Anordnung als zu testende aktuelle Anordnung für den Zufallsgenerator in den reservierten Bereich geladen. Das Umkonfigurieren der jeweils aktuellen Anordnung des Zufallsgenerators durch das Rekonfigurationsmodul kann nach dem Zufallsprinzip durchgeführt werden.

Alternativ kann die Umkonfiguration der jeweils aktuellen Anordnung des Zufallsgenerators aber auch durch systematische Permutation der Basisblöcke des für die Implementierung reservierten Bereichs durchgeführt werden.

Eine vorteilhafte Fortbildung der Erfindung sieht vor, dass bei Beendigung der Initialisierungsphase die im Rekonfigurationsmodul aktuell gespeicherte Anordnung des Zufallsgenerators an eine Syntheseeinheit weitergeleitet wird, wobei die Beendigung der Initialisierungsphase für den jeweiligen elektronischen Bauteil bzw. FPGA durch ein Erreichen der vorgegebenen Anzahl an Wiederholungen der Verfahrensschritte ausgelöst werden kann. Die Anzahl an Wiederholungen kann beispielsweise als Anfangs- oder Startparameter für die Initialisierungsphase vorgegebenen werden. Auf die Initialisierungsphase folgt dann eine Synthesephase, in welcher ein Konfigurationsfile für das gesamte Design des jeweiligen elektronischen Bauteils bzw. FPGAs erstellt wird. Dabei wird die während der Initialisierungsphase für den jeweiligen elektronischen Bauteil gefundene optimale Anordnung des Zufallsgenerators verwendet und ein elektronischer Bauteil mit der entsprechenden Zufallsgenerator-Anordnung erstellt.

Weiterhin erfolgt die Lösung der genannten Aufgabe auch durch eine Anordnung eines Zufallsgenerators, welcher auf einem als programmierbare, integrierte Schaltung, insbesondere als so genanntes Field Programmable Gate Array oder FPGA ausgeführten, elektronischen Bauteil implementiert und welcher durch das erfindungsgemäße Verfahren erstellbar ist. Bei dieser Anordnung sind alle jene Basisblöcke der Grundstruktur des Bauteils bzw. des FPGAs, welche zum Zufallsgenerator gehören, mit jenen Basisblock-Positionen verknüpft, welche als optimale Anordnung für den Zufallsgenerator durch das erfindungsgemäße Verfahren ermittelt wurden. Alle anderen Basisblöcke im zumindest für den Zufallsgenerator reservierten Bereich des elektronischen Bauteils bzw. FPGAs bleiben ungenutzt, um das Verhalten des Zufallsgenerators nicht zu beeinflussen.

### Kurzbeschreibung der Zeichnung

Die Erfindung wird nachfolgend in beispielhafter Weise anhand der beigefügten Figuren erläutert. Dabei zeigen:
- Figur 1: schematisch einen beispielhaften Ablauf des erfindungsgemäßen Verfahren zur optimalen Anordnung eines Zufallsgenerators auf einem beispielhaften elektronischen Bauteil während einer Initialisierungsphase
- Figur 2: schematisch und beispielhaft einen Übergang von der Initialisierungsphase zu einer Synthesephase zum Festlegen eines endgültiges Design des beispielhaften elektronischen Bauteils

### Ausführung der Erfindung

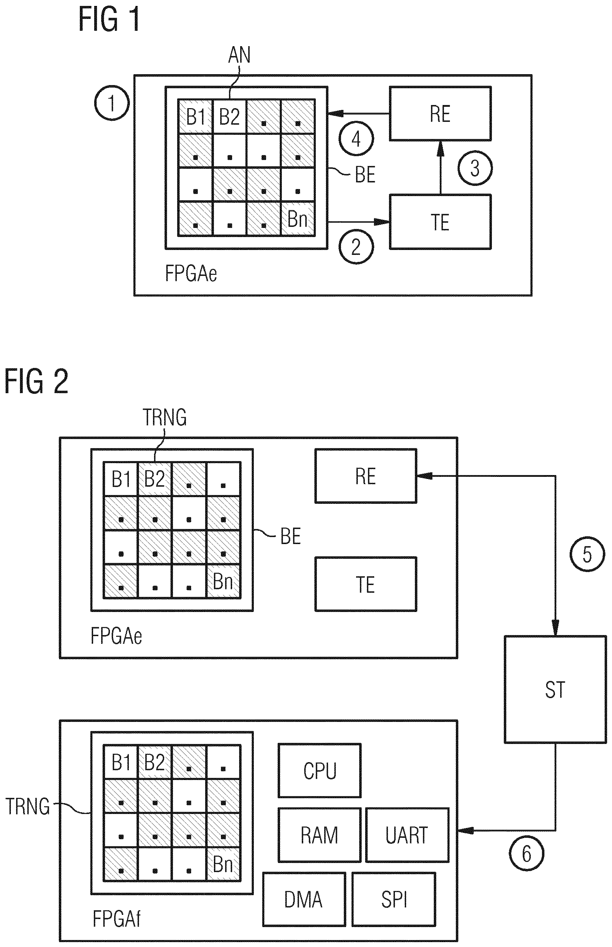

Figur 1 zeigt in schematischer Weise ein beispielhaftes elektronisches Bauteil FPGAe während einer Initialisierungsphase, welche für jedes elektronisches Bauteil FPGAe in einem Fertigungsprozess eingeführt wird. Das elektronische Bauteil FPGAe ist beispielsweise als so genanntes Field Programmable Gate Array oder FPGA ausgeführt und weist einen Grundstruktur auf, welche auch einer Vielzahl aus Basisblöcken B1, B2, ..., Bn besteht, welche beispielhaft in einem Bereich BE dargestellt sind.

Auf dem elektronischen Bauteil FPGAe soll während des Fertigungsprozesses eine logische Schaltung bzw. eine Schaltungsanordnung implementiert werden, welche zumindest einen Zufallsgenerator, vor allem einen Hardware-Zufallsgenerator oder einen so genannten True Random Number Generator TRNG, umfasst. Dabei wird durch das erfindungsgemäße Verfahren eine optimale Anordnung TRNG für den Hardware-Zufallsgenerator während der Initialisierungsphase in der Fertigung ermittelt.

In einem ersten Verfahrensschritt 1 wird dazu eine Startkonfiguration für die Initialisierungsphase auf das elektronische Bauteil FPGAe bzw. in die Grundstruktur des Bauteils FPGAe geladen. Diese Startkonfiguration umfasst zumindest ein Testmodul TE zum Ausführen einer vorgegebenen Testfolge für Zufallsgeneratoren bzw. zum Bewerten einer Qualität der generierten Zufallszahlen wie z.B. der so genannte so genannte NIST Statistical Test Suite. Diese vorgegebene Testfolge ist beispielsweise im Testmodul TE fest programmiert. Weiterhin weist die Startkonfiguration ein Rekonfigurationsmodul RE auf, mit welchem die jeweils aktuelle Anordnung AN des Zufallsgenerators auf dem elektronischen Bauteil FPGAe umkonfiguriert werden kann. Für eine Implementierung der jeweils aktuellen Anordnung AN des Zufallsgenerators wird ein Bereich BE des elektronischen Bauteils FPGAe reserviert. Dieser Bereich BE besteht aus Basisblöcken B1, B2, ..., Bn und ist größer als ein Bereich, welcher durch eine Logik des Zufallsgenerators belegt ist, sodass verschiedene Anordnungen AN getestet werden können. In der Figur 1 sind daher beispielhaft von der jeweils aktuelle Anordnung AN genutzte Basisblöcke B1, B2 ..., Bn schraffiert und die von der jeweils aktuellen Anordnung AN nicht benutzte Basisblöcke B1, B2, ..., Bn weiß dargestellt. Weiterhin wird im ersten Verfahrensschritt 1 eine Anzahl, mit welcher die folgenden Verfahrensschritte 2 bis 4 wiederholt werden, als Anfangs- oder Startparameter vorgegeben und eine Startanordnung AN für den Zufallsgenerator in den reservierten Bereich BE geladen.

In einem zweiten Verfahrensschritt 2 wird dann für die jeweils im Bereich BE implementierte aktuelle Anordnung AN des Zufallsgenerators die vorgegebene Testfolge durch das Testmodul TE ausgeführt. Durch diese Testfolge kann beispielsweise ein Entropie bzw. eine Qualität der mittels der aktuellen Zufallsgenerator-Anordnung AN generierten Zufallszahlen abgeschätzt bzw. bewertet werden. In einem dritten Verfahrensschritt 3 werden dann vom Testmodul TE die Testergebnisse für die jeweils aktuelle Anordnung AN des Zufallsgenerators an das Rekonfigurationsmodul RE weitergeleitet.

Im vierten Verfahrensschritt 4 wird einerseits die jeweils aktuelle Anordnung AN des Zufallsgenerators, welche im reservierten Bereich BE bzw. auf dem elektronischen Bauteil FPGAe implementiert ist, durch das Rekonfigurationsmodul RE umkonfiguriert, wobei die jeweilige Konfiguration der Basisblöcke B1, B2, ..., Bn des für den Zufallsgenerator reservierten Bereichs BE direkt vom Rekonfigurationsmodul RE umprogrammiert wird. Dazu wird vom Rekonfigurationsmodul RE als interner Rekonfigurationsmechanismus beispielsweise eine so genannte Dynamic Partial Reconfiguration- oder DPR-Anwendung eingesetzt. Die Umkonfiguration der jeweils aktuellen Anordnung AN des Zufallsgenerators kann dabei entweder nach den Zufallsprinzip oder durch systematische Permutation der für die Implementierung des Zufallsgenerators reservierten Basisblöcke B1, B2, ..., Bn durchgeführt werden.

Dann wird - basierend auf dem vom Testmodul TE weitergeleiteten Testergebnis - die neue aktuelle Anordnung AN des Zufallsgenerators in den für den Zufallsgenerator reservierten Bereich BE des elektronischen Bauteils FPGAe geladen und die Verfahrensschritte 2 bis 4 bis zum Erreichen der im ersten Verfahrensschritt 1 vorgegebenen Anzahl an Wiederholungen wiederholt durchlaufen. Bei jeder Wiederholung der Verfahrensschritte 2 bis 4 wird im Rekonfigurationsmodul RE beim vierten Verfahrensschritt 4 das Testergebnis der jeweils aktuellen Anordnung AN des Zufallsgenerators mit dem Testergebnis der vorangegangenen Anordnung des Zufallsgenerators verglichen. Ist das Testergebnis der aktuellen Anordnung AN des Zufallsgenerators besser als das Testergebnis der vorangegangenen Anordnung, so wird die aktuelle Anordnung AN des Zufallsgenerators im Rekonfigurationsmodul RE gespeichert. Weist die aktuelle Anordnung AN des Zufallsgenerators ein schlechteres Testergebnis als die vorangegangene Anordnung auf, so wird die aktuelle Anordnung AN des Zufallsgenerators verworfen - bis bei Erreichen der vorgegebenen Anzahl an Wiederholungen eine optimale Anordnung TRNG für den Zufallsgenerator auf dem elektronischen Bauteil FPGAe im Rekonfigurationsmodul RE gespeichert ist, welche das beste Testergebnis von allen während der Wiederholungen der Verfahrensschritte 2 bis 4 getesteten Anordnungen AN aufweist. D.h. die mittels dieser Anordnung TRNG des Zufallsgenerators erzeugten Zufallszahlen weisen die höchste Entropie bzw. Qualität auf. Mit Erreichen der vorgegebenen Anzahl an Wiederholungen wird auch die Initialisierungsphase für das jeweilige elektronische Bauteil FPGAe beendet.

Ein Übergang von der Initialisierungsphase zu einer Synthesephase, in welcher ein endgültiges Design FPGAf des beispielhaften elektronischen Bauteils FPGAe festgelegt wird, ist schematisch und beispielhaft in Figur 2 dargestellt. Figur 2 zeigt wieder das elektronische Bauteil FPGAs am Ende der Initialisierungsphase, welches wieder zumindest das Testmodul TE, das Rekonfigurationsmodul RE, in welchem die optimale Anordnung TRNG des Zufallsgenerators gespeichert ist, und die im reservierten Bereich BE die optimale Anordnung TRNG des Zufallsgenerators umfasst. Bei der optimalen Anordnung TRNG des Zufallsgenerators sind die für den Zufallsgenerator benutzten Basisblöcke B1, B2, ..., Bn wieder schraffiert und unbenutzten Basisblöcke B1, B2, ..., Bn wieder weiß dargestellt.

Am Ende der Initialisierungsphase in der Fertigung wird dann in einem fünften Verfahrensschritt 5 die im Rekonfigurationsmodul RE gespeicherte optimale Anordnung TRNG des Zufallsgenerators ausgelesen und an eine Syntheseeinheit ST weitergeleitet. Der Initialisierungsphase folgt eine Synthesephase, in welcher ein Konfigurationsfile für ein gesamtes Design FPGAf für den jeweiligen elektronischen Bauteil FPGAe erstellt wird. In einem sechsten Verfahrensschritt 6 wird dann der elektronische Bauteil FPGAe mit Hilfe des Konfigurationsfiles mit diesem finalen Design FPGAf entsprechend konfiguriert bzw. der Bauteil FPGAe in den final designten Bauteil FPGAf übergeführt. Dabei wird dann die während der Initialisierungsphase für den jeweiligen elektronischen Bauteil FPGAe gefundene, optimale Anordnung TRNG des Zufallsgenerators neben weiteren beispielhaft dargestellten Funktionsmodulen CPU, RAM, UART, DMA, SPI implementiert. D.h. jene Basisblöcke B1, B2, ..., Bn des Zufallsgenerators TRNG am Bauteil FPGAe bzw. des finalen Designs FPGAf werden mit jenen während der Initialisierungsphase für die optimale Anordnung TRNG gefundenen Basisblockpositionen B1, B2, ..., Bn verknüpft - diese Positionen bzw. Basisblöcke B1, B2, ..., Bn des finalen Designs FPGAf des elektronischen Bauteils FPGAe sind in Figur 2 ebenfalls schraffiert dargestellt. Alle anderen Basisblockpositionen B1, B2, ..., Bn des für den Zufallsgenerator TRNG reservierten Bereichs BE bleiben im finalen Design FPGAf des elektronischen Bauteils FPGAe unbenutzt, um eine Beeinflussung des Verhaltens des Zufallsgenerators TRNG zu vermeiden. Die unbenutzten Basisblöcke B1, B2, ..., Bn sind in Figur 2 auch beim final designten Bauteil FPGAf weiß dargestellt.

Durch das erfindungsgemäße Verfahren können automatisch und ohne manuelle Interaktion Bauteil-spezifische Zufallsgeneratoren TRNG gefunden, mit welchen Sequenzen von Zufallszahlen hoher Entropie bzw. Qualität erzeugt werden. Durch die individuell an das jeweilige Bauteil FPGAe angepasste, optimale Anordnung TRNG des Zufallsgenerators können negative Einflüsse von Fertigungsschwankungen und Variationen des elektronischen Bauteils FPGAe auf die Qualität der Zufallszahlen ohne großen Aufwand ausgeglichen werden.

## Patentansprüche

1. Verfahren zur optimalen Anordnung eines Zufallsgenerators auf einem elektronischen Bauteil (FPGAe), wobei der elektronische Bauteil (FPGAe), auf welchem der Zufallsgenerator realisiert wird, als programmierbare, integrierte Schaltung, insbesondere als so genanntes Field Programmable Gate Array oder FPGA ausgeführt ist und eine aus einer Vielzahl an Basisblöcken (B1, B2, ..., Bn) bestehende Grundstruktur aufweist, ***dadurch gekennzeichnet, dass*** während einer Initialisierungsphase ausgehend von einer Startkonfiguration für eine jeweils aktuelle Anordnung des Zufallsgenerators auf dem jeweiligen elektronischen Bauteil (FPGAe) folgende Schritte mit einer vorgegebenen Anzahl an Wiederholungen durchgeführt werden:
- Ausführen einer vorgegebenen Testfolge mit der jeweils aktuelle Anordnung (AN) des Zufallsgenerators (2) ;
- Weiterleiten eines Testergebnisses an ein Rekonfigurationsmodul (RE, 3);
- Umkonfigurieren der jeweils aktuellen Anordnung (AN) des Zufallsgenerators auf dem elektronischen Bauteil (FPGAe) durch das Rekonfigurationsmodul (RM, 4), wobei die jeweilige, aktuelle Anordnung der Basisblöcke (B1, B2, ..., Bn), durch welche der Zufallsgenerator repräsentiert wird, angepasst bzw. verändert wird;
wobei bei jeder Wiederholung das Testergebnis der jeweils aktuellen Anordnung (AN) des Zufallsgenerators mit dem Testergebnis einer jeweils vorhergegangenen Anordnung des Zufallsgenerators verglichen wird und die jeweils aktuelle Anordnung des Zufallsgenerators abgespeichert wird (4), wenn das Testergebnis der jeweils aktuellen Anordnung (AN) des Zufallsgenerators ein besseres Testergebnis als die jeweils vorhergegangene Anordnung des Zufallsgenerators aufweist.

2. Verfahren nach Anspruch 1, ***dadurch gekennzeichnet, dass*** als Testergebnis eine Entropie von Zufallszahlen herangezogen wird, welche mit der jeweils aktuellen Anordnung (AN) des Zufallsgenerators auf dem elektronischen Bauteil (FPGAe) erzeugt werden.

3. Verfahren nach einem der Ansprüche 1 bis 2, ***dadurch gekennzeichnet, dass*** zum Ausführen der vorgegebenen Testfolge ein Testmodul (TE) verwendet wird (2), in welchem die vorgegebene Testfolge fest programmiert ist.

4. Verfahren nach einem der Ansprüche 1 bis 3, ***dadurch gekennzeichnet, dass*** für eine Implementierung des Zufallsgenerators zumindest ein aus Basisblöcken (B1, B2, ..., Bn) bestehender Bereich (BE) des elektronischen Bauteils (FPGAe) reserviert wird (1).

5. Verfahren nach einem der Ansprüche 1 bis 4, ***dadurch gekennzeichnet, dass*** für eine Umkonfiguration der jeweils aktuellen Anordnung (AN) des Zufallsgenerators durch das Rekonfigurationsmodul (RE) eine so genannte Dynamic Partial Reconfiguration- oder DPR-Anwendung eingesetzt wird (4).

6. Verfahren nach einem der Ansprüche 1 bis 5, ***dadurch gekennzeichnet, dass*** die Umkonfiguration der jeweils aktuellen Anordnung (AN) des Zufallsgenerators durch das Rekonfigurationsmodul (RE) nach dem Zufallsprinzip durchgeführt wird (4).

7. Verfahren nach einem der Ansprüche 1 bis 5, ***dadurch gekennzeichnet, dass*** die Umkonfiguration der jeweils aktuellen Anordnung (AN) des Zufallsgenerators durch das Rekonfigurationsmodul (RE) durch systematische Permutation der Basisblöcke (B1, B2, ..., Bn) des für die Implementierung reservierten Bereichs (BE) durchgeführt wird (4).

8. Verfahren nach einem der Ansprüche 1 bis 7, ***dadurch gekennzeichnet, dass*** bei Beendigung der Initialisierungsphase die im Rekonfigurationsmodul (RE) aktuell gespeicherte Anordnung (TRNG) des Zufallsgenerators an eine Syntheseeinheit (ST) weitergeleitet wird (5).

## Claims

1. Method for the optimal arrangement of a random generator on an electronic component (FPGAe), wherein the electronic component (FPGAe), on which the random generator is realised, is designed as a programmable integrated circuit, in particular as what is known as a Field Programmable Gate Array or FPGA, and has a basic structure consisting of a plurality of basic blocks (B1, B2, ..., Bn),
***characterised in that*** during an initialisation phase, starting from a starting configuration for a respective current arrangement of the random generator on the respective electronic component (FPGAe), the following steps are performed with a predefined number of repetitions:
- Carrying out a predefined test sequence with the respective current arrangement (AN) of the random generator (2);
- Forwarding a test result to a reconfiguration module (RE, 3);
- Reconfiguring the respective current arrangement (AN) of the random generator on the electronic component (FPGAe) by way of the reconfiguration module (RM, 4), wherein the respective current arrangement of the basic blocks (B1, B2, ..., Bn), by way of which the random generator is represented, is adjusted or changed;
wherein, on each repetition, the test result of the respective current arrangement (AN) of the random generator is compared with the test result of a respective previous arrangement of the random generator and the respective current arrangement of the random generator is then saved (4), if the test result for the respective current arrangement (AN) of the random generator has a better test result than the respective previous arrangement of the random generator.

2. Method according to claim 1, ***characterised in that*** an entropy of random numbers which are generated using the respective current arrangement (AN) of the random generator on the electronic component (FPGAe) is used as a test result.

3. Method according to one of claims 1 to 2, ***characterised in that*** a test module (TE), in which the predefined test sequence is hard-wire programmed, is used (2) to carry out the predefined test sequence.

4. Method according to one of claims 1 to 3, ***characterised in that*** at least one region (BE) of the electronic component (FPGAe) consisting of basic blocks (B1, B2, ..., Bn) is reserved (1) for an implementation of the random generator.

5. Method according to one of claims 1 to 4, ***characterised in that*** a so-called Dynamic Portal Reconfiguration or DPE application is used (4) by the reconfiguration module (RE) for a reconfiguration of the respective current arrangement (AN) of the random generator.

6. Method according to one of claims 1 to 5, ***characterised in that*** the reconfiguration of the respective current arrangement (AN) of the random generator is performed (4) by the reconfiguration module (RE) according to the random principle.

7. Method according to one of claims 1 to 5, ***characterised in that*** the reconfiguration of the respective current arrangement (AN) of the random generator is performed (4) by the reconfiguration module (RE) by systematic permutation of the basic blocks (B1, B2, ..., Bn) of the region (BE) reserved for the implementation.

8. Method according to one of claims 1 to 7, ***characterised in that*** when the initialisation phase is concluded, the arrangement (TRNG) of the random generator currently stored in the reconfiguration module (RE) is forwarded to a synthesis unit (ST).

## Revendications

1. Procédé d'agencement optimal d'un générateur aléatoire sur un composant électronique (FPGAe), le composant électronique (FPGAe) sur lequel est réalisé le générateur aléatoire étant réalisé en tant que circuit intégré programmable, et plus particulièrement en tant que ce qu'il est convenu d'appeler un Field Programmable Gate Array ou FPGA et comportant une structure de base composée d'une pluralité de blocs de base (B1, B2, ..., Bn), **caractérisé en ce que** sont exécutées, pendant une phase d'initialisation, partant d'une configuration de départ pour un agencement respectivement actuel du générateur aléatoire sur le composant électronique respectif (FPGAe), les étapes suivantes avec un nombre donné de répétitions :
- exécution d'une séquence de test donnée avec l'agencement respectivement actuel (AN) du générateur aléatoire (2) ;
- retransmission d'un résultat de test à un module de reconfiguration (RE, 3) ;
- reconfiguration de l'agencement respectivement actuel (AN) du générateur aléatoire sur le composant électronique (FPGAe) par le module de reconfiguration (RM, 4), l'agencement respectivement actuel des blocs de base (B1, B2, ..., Bn) représentant le générateur aléatoire étant adapté resp. modifié ;
à chaque répétition, le résultat de test de l'agencement respectivement actuel (AN) du générateur aléatoire étant comparé avec le résultat de test d'un agencement respectivement précédent du générateur aléatoire et l'agencement respectivement actuel du générateur aléatoire étant sauvegardé (4) si le résultat de test de l'agencement respectivement actuel (AN) du générateur aléatoire présente un résultat de test meilleur que l'agencement respectivement antérieur du générateur aléatoire.

2. Procédé selon la revendication 1, **caractérisé en ce que** qu'il est fait appel, en tant que résultat de test, à une entropie de nombres aléatoires qui sont générés avec l'agencement respectivement actuel (AN) du générateur aléatoire sur le composant électronique (FPGAe).

3. Procédé selon l'une des revendications 1 à 2, **caractérisé en ce qu'**est utilisé (2), pour exécuter la séquence de test donnée, un module de test (TE) dans lequel la séquence de test donnée est programmée à demeure.

4. Procédé selon l'une des revendications 1 à 3, **caractérisé en ce qu'**au moins une zone (BE) du composant électronique (FPGAe) composée de blocs de base (B1, B2, ..., Bn) est réservée (1) pour une implémentation du générateur aléatoire.

5. Procédé selon l'une des revendications 1 à 4, **caractérisé en ce que** ce qu'il est convenu d'appeler une application Dynamic Partial Reconfiguration ou DPR est utilisée (4) pour une reconfiguration de l'agencement respectivement actuel (AN) du générateur aléatoire par le module de reconfiguration (RE).

6. Procédé selon l'une des revendications 1 à 5, **caractérisé en ce que** la reconfiguration de l'agencement respectivement actuel (AN) du générateur aléatoire est exécutée (4) au hasard par le module de reconfiguration (RE).

7. Procédé selon l'une des revendications 1 à 5, **caractérisé en ce que** la reconfiguration de l'agencement respectivement actuel (AN) du générateur aléatoire est exécutée (4) par le module de reconfiguration (RE) par permutation systématique des blocs de base (B1, B2, ..., Bn) de la zone (BE) réservée pour l'implémentation.

8. Procédé selon l'une des revendications 1 à 7, **caractérisé en ce que** l'agencement (TRNG) du générateur aléatoire actuellement sauvegardé dans le module de reconfiguration (RE) est retransmis (5) à une unité de synthèse (ST) à la fin de la phase d'initialisation.
